# EUROPEAN PATENT SPECIFICATION

(11) **EP 3 626 528 B1**
(45) Date of publication and mention of the grant of the patent: **26.05.2021**
(21) Application number: 19198792.4
(22) Date of filing: 20.09.2019
(51) Int. Cl.: B60N 3/00

(54) **VEHICLE PROVIDED WITH AN IMPROVED TABLE**
FAHRZEUG MIT VERBESSERTEM TISCH
VÉHICULE DOTÉ D'UNE TABLE AMÉLIORÉE

(30) Priority: 21.09.2018 IT 201800008807
(43) Date of publication of application: 25.03.2020
(73) Proprietor: Iveco S.p.A., 10156 Torino (IT)
(72) Inventor: GUARINO, Salvatore, 10044 PIANEZZA (TO) (IT)
(74) Representative: Faraldi, Marco

(56) References cited:
- DE-C1- 4 327 869
- US-A- 2 789 861

## Description

### TECHNICAL FIELD

The invention relates to a vehicle, more in particular to a heavy vehicle, such as a truck, provided with an improved table.

### KNOWN STATE OF THE ART

Heavy vehicles, such as for example trucks, usually comprise support surfaces designed to allow the driver of the vehicle, when on a brake, to eat and/or lay use elements, such as a laptop.

Said support planes are normally designed, in order to decrease the space taken up inside the cabin, as foldable tables housed in the dashboard and/or inside elements that are integral to the seat.

Examples of known foldable tables are described in patents EP2586655 A1, EP2586656 A1 or EP2465377 A1. These patents disclose foldable tables that take up a lot of space inside the dashboard, thus increasing the dimensions thereof.

Other examples of foldable tables for vehicles are disclosed in documents US2789861 A or DE4327869 C1.

In particular, these foldable tables comprise a first and a second half planes, which are connected to one another in a foldable manner and are arranged inside the dashboard over their entire extension along the side parallel to the extraction direction.

These dimensions can be decreased by reducing the size of the table, though jeopardizing the capacity thereof and the easiness with which the driver of the vehicle can use it.

Therefore, there is a strong need for vehicles comprising foldable tables capable of offering an adequate support surface, though without taking up too much space inside the dashboard.

The object of the invention is to fulfil the needs discussed above.

### SUMMARY OF THE INVENTION

The aforesaid object is reached by a means of a vehicle comprising a foldable table according to the appended claims.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- figure 1 shows a perspective view of a dashboard of a vehicle comprising a table according to the invention;
- figure 2 and figure 3 show a perspective view and a side view, respectively, with parts removed for greater clarity, of the dashboard provided with table of figure 1 in a first operating condition;
- figures 4 and 5, 6 and 7, 8 and 9, 10 and 11 show respective perspective and side views, with parts removed for greater clarity, of different moving phases of the table of figures 2 and 3 in order to move it from a first to a second operating condition; and
- figures 12 and 13 show a perspective view and a side view, respectively, with parts removed for greater clarity, of the dashboard provided with table of figure 2 in a second operating condition.

### DETAILED DESCRIPTION OF THE INVENTION

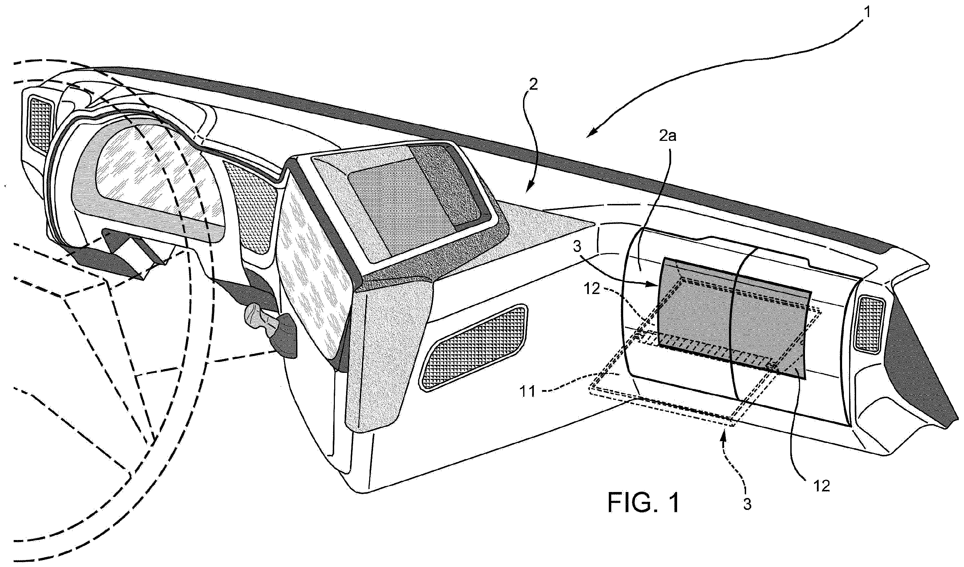

Figure 1 shows the inside 1 of a vehicle (not shown) basically comprising a dashboard 2 configured to support and/or house a plurality of known elements and provided with an outer wall 2a with any shape, in the example shown herein a concave shape towards the inside 1 of the cabin of the vehicle. The dashboard 2 further comprises a housing 4 configured to house, on the inside, a table 3 according to the invention.

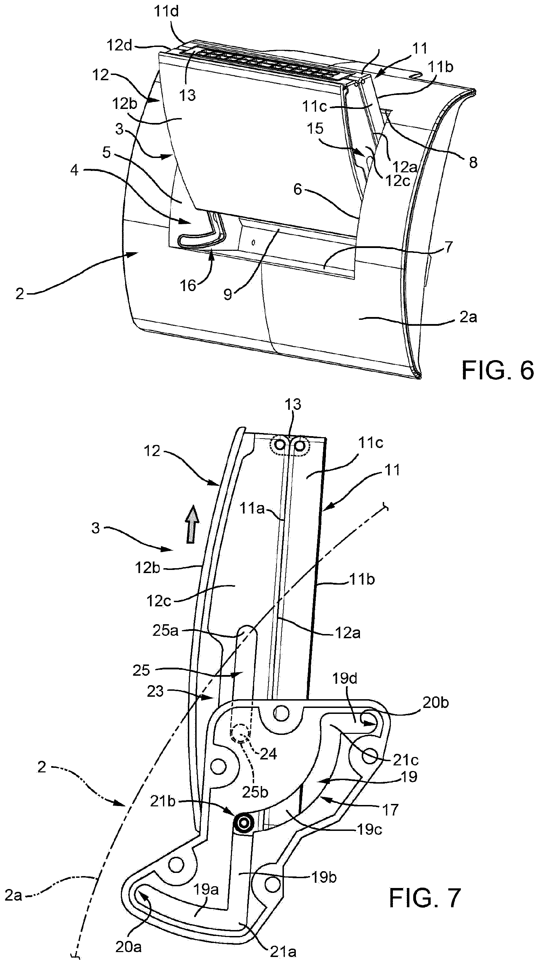

According to figures 6, 8 and 10, the housing 4 can be defined by a pair of side walls 5 and 6, by a lower wall 7, by an upper wall 8 and by a bottom wall 9. Said walls 5, 6, 7, 8 and 9 are preferably manufactured as one single piece and, more preferably, they are manufactured as one single piece together with the outer wall 2a of the dashboard 2.

The depth of the lower wall 7 inside the dashboard 2 preferably is greater than the depth of the upper wall 8 and the bottom wall 9 is inclined, preferably curved, in order to join the rear edges of said walls 7, 8. Furthermore, the housing 4 is open in the direction of the driver of the vehicle, at the front relative to the bottom wall 9.

The bottom wall 9 extends inside the dashboard 2 with a depth of less than 100 mm. The table 3 comprises a first upper half plane 11 and a second lower half plane 12, each comprising a support wall 11a, 12a, a lower wall 11b, 12b, which is opposite the respective support wall 11a, 12a, and a pair of side walls 11c, 11d, 12c, 12d, which laterally join the support walls 11a, 12a and the lower walls 11b 12b. The support walls 11a, 12a, the lower walls 11b, 12b and the side walls 11c, 11d, 12c, 12d are preferably made of a plastic material and manufactured as one single piece.

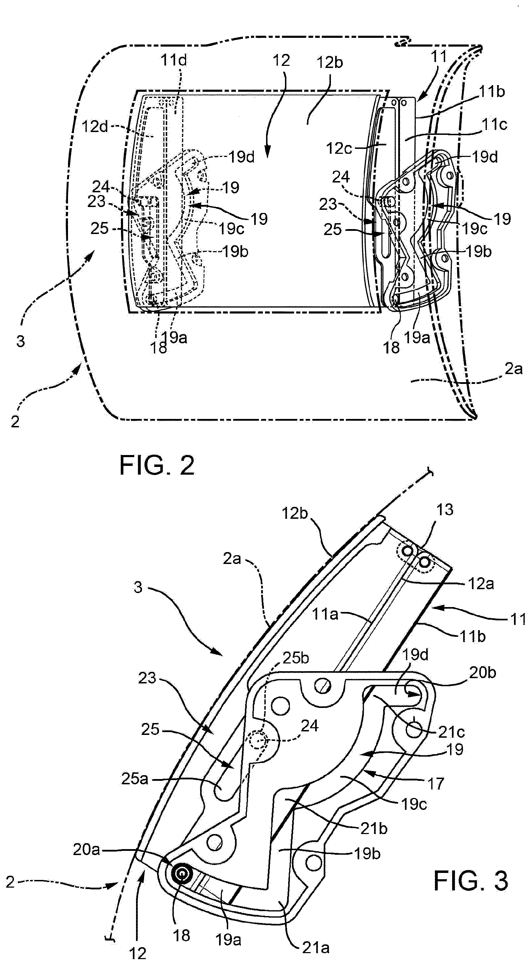

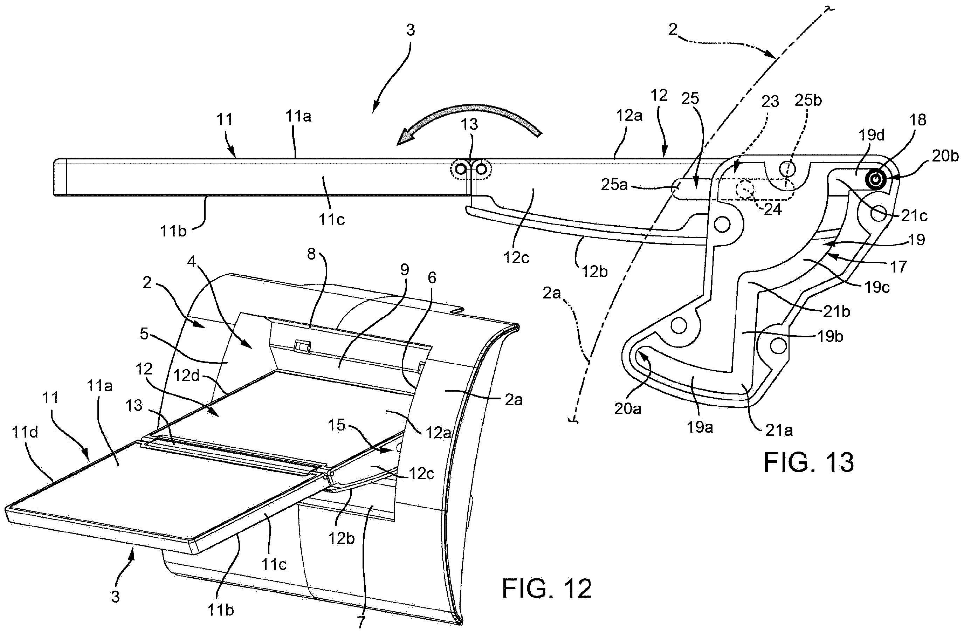

The half planes 11, 12 are connected to one another so as to define a first operating condition, in which the respective support walls 11a, 12a of the half planes 11, 12 face one another (figures 2 to 11), and a second position, in which the support surfaces 11a, 12a are adjacent to one another (figures 12 and 13) defining a support plane 10 that can be used by the user of the vehicle.

This connection is advantageously obtained by means of a mechanical coupling, which is configured to allow the half planes 11, 12 to move relative to one another between the two operating conditions described above. This mechanical connection can preferably comprise a hinge 13 joining the two half planes 11, 12 along a transverse edge thereof so that the upper half plane 11 can rotate along a transverse edge of the lower half plane 12.

According to the invention, one of the lower walls 11b, 12b of the two half planes 11, 12 has the same shape as the outer wall 2a of the dashboard 2 so that, when the table 3 is folded inside the housing 4, there is continuity between the lower wall 11b, 12b of the table 3 and the outer wall 2a of the dashboard 2. According to the embodiment described herein, the lower wall 12b of the lower half plane 12 defines a shape that is complementary to the one of the outer wall 2a of the dashboard 2, whereas the lower wall 11b has a substantially flat shape.

According to the invention, one of the two half planes 11, 12 is connected to the side walls 5 and 6 defining the housing 4 by means of respective cam connections 15, 16 arranged between the side walls 5 and 6 and the side walls 11c, 11d, 12c, 12d of one of the two half lanes 11, 12. According to the embodiment described herein, the side walls 12c, 12d of the lower half-plane 12 are connected, by means of cam connections 15, 16, to the side walls 5 and 6 of the housing 4.

According to figures 3, 5, 7, 9, 11 or 13, with reference, for the sake of simplicity, to the sole right side wall 12c, the cam mechanism 15 comprises a first cam arrangement 17 configured to guide the movements of the half plane 12 so as to shift from a folded configuration to an open configuration - or vice versa - of the table 3.

According to the embodiment shown herein, the cam arrangement 17 comprising a pin 18 carried by the lower half plane 12 and configured to slide in a guide 19 obtained in the side wall 6.

According to the kinematic mechanism shown herein, the guide 19 defines the following path, from the bottom left corner to the top right corner of the side wall 6, comprising:
- a first curved portion 19a concave in an upwards direction (namely, towards the outer wall 2a of the dashboard 2) and defining a lower end of stroke 20a for the pin 18;
- a first straight portion 19b, vertical and extending in a continuous manner from a rear end of the first curved portion 19a;

- a second curved portion 19c concave in an upwards direction, with a greater bending than the first curved portion 19a and extending in a continuous manner from an upper end of the first portion 19b; and
- a second straight portion 19d, horizontal and extending in a continuous manner from a top end of the second curved portion 19c and further defining an upper end of stroke 20b for the pin 18.

The intersection between the first straight portion 19a and the first curved portion 19b defines a first intermediate point 21a, which can be reached by the pin 18 during its stroke inside the guide 19, the intersection between the first curved portion 19b and the second straight portion 19c defines a second intermediate point 21b and the intersection between the second curved portion 19c and the second straight portion 19d defines a third intermediate point 21c.

The cam mechanism 15 further comprises a second cam arrangement 23 configured to define a static constraint between the half plane 12 and the side walls 5,6 when the table 3 is in an open configuration.

The second cam arrangement 23 can comprise a pin 24 carried by the side wall 6 and a guide 25 obtained on the side wall 12c of the lower half plane 12. The horizontal guide 25 has a length such that and is positioned in such a way that, in combination with the cam arrangement 17, it allows the lower half plane 12 to be moved. The guide 25 defines a left end of stroke 25a and a right end of strike 25b.

The cam connection 16 between the side wall 12d of the half plane 12 and the side wall 6 defining the housing 4 is mirror-like and equal to the cam connection 15 described above; therefore, it is not described for the sake of brevity.

The table 3 works as follows.

In a first operating condition of the table 3, namely a folded condition, according to figures 2 and 3, the half planes 11 and 12 are folded relative to one another, with the support walls 11a, 12a facing one another, and they are housed inside the housing 4 so that the lower wall 12b of the lower half plane 12 is a continuation of the outer wall 2a of the dashboard 2. In this configuration, the pin 18 is at the lower end of stroke 20a and the pin 24 is at the right end of stroke 25b.

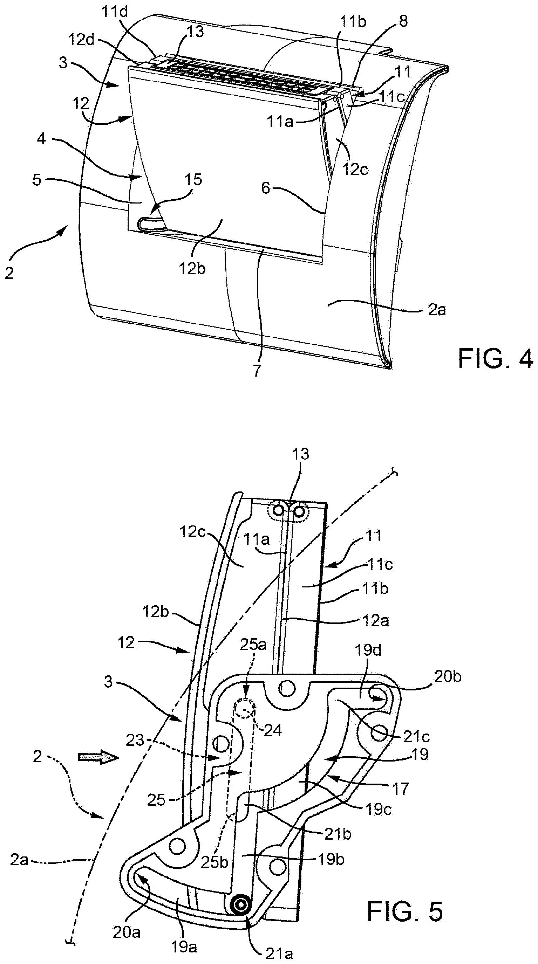

In a first moving phase of the table 3, according to figures 4 and 5, the driver of the vehicle can exert a force upon a lower portion of the wall 12b of the half plane 12, i.e. under the pin 24, so that the half planes 11, 12 rotate around the hinge created by the pin 24 and the pin 18 moves from the lower end of stroke 20a to the first intermediate position 21a along the first curved portion 19a.

In a second moving phase of the table 3, according to figures 6 and 7, the driver of the vehicle applies a vertical force aimed at lifting the half planes 11, 12 from the housing 4. In this way, the pin 24 slides in the guide 25 from the left end of stroke 25a to the right end of stroke 25b and the pin 18 moves from the first intermediate position 21a to the second intermediate position 21b along the first straight portion 19b.

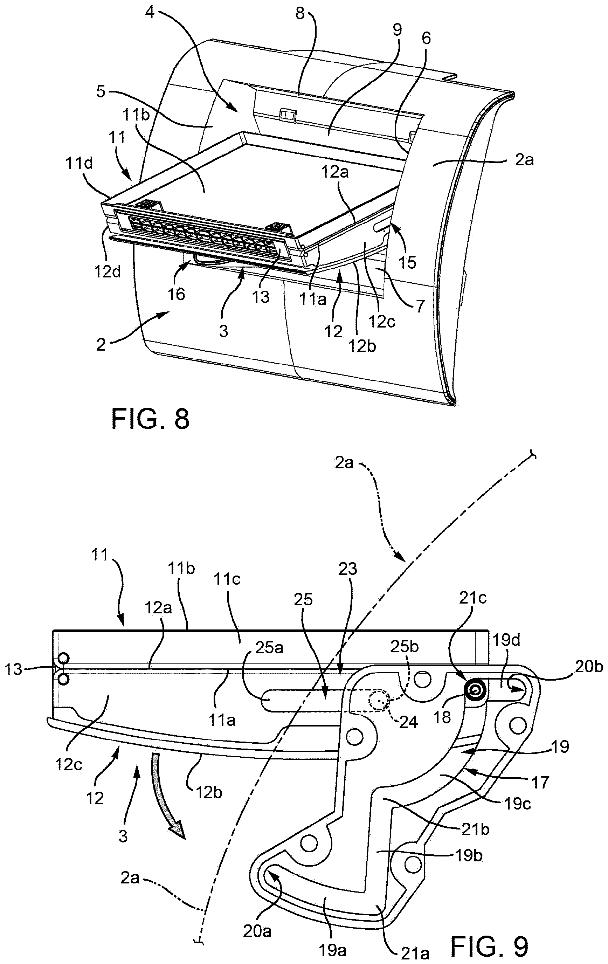

In a third moving phase of the table 3, according to figures 8 and 9, the driver of the vehicle can exert a force upon a lower portion of the wall 12b of the half plane 12, always under the pin 24, so that the half planes 11, 12 rotate around the hinge created by the pin 24 and the pin 18 moves from the second intermediate position 21b to the third intermediate position 21c along the second curved portion 19c.

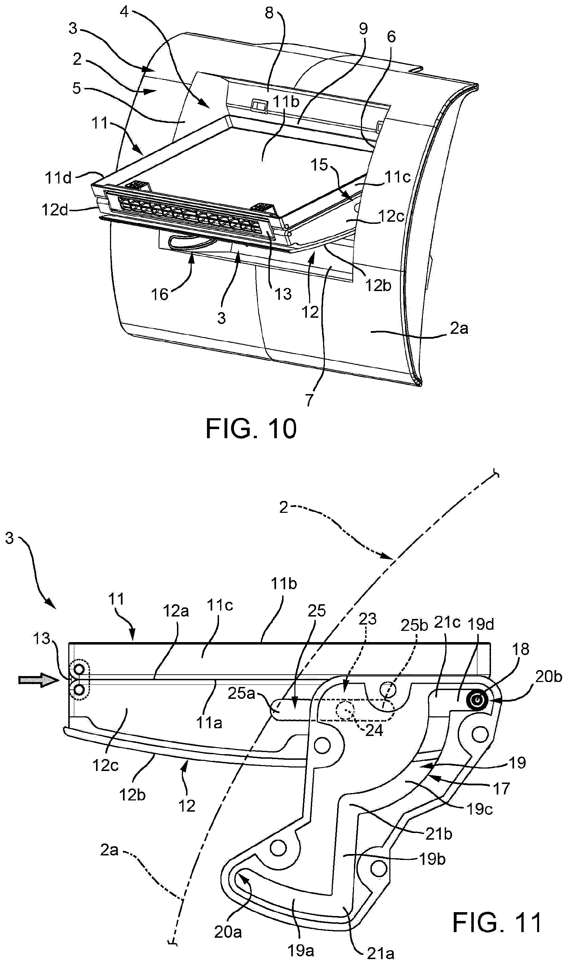

In a fourth moving phase of the table 3, according to figures 10 and 11, the driver of the vehicle applies a horizontal force aimed at pushing the half planes 11, 12 towards the inside of the housing 4. In this way, the pin 24 slides in the guide 25 from the right end of stroke 25b to an intermediate position between the latter and the left end of stroke and the pin 18 moves from the third intermediate position 21c to the upper end of stroke 20b along the second straight portion 19d.

In a fifth moving phase, which is shown in figure 13, the driver of the vehicle can overturn the half plane 11 relative to the half plane 12, causing it to rotate around the hinge 13 so that the support portions 11a, 12a define the support plane 10, as shown in figure 12, which shows the second operating condition, namely the open condition, of the table 3. In this configuration, thanks to the position of the pins 18, 24, a weight applied on the support plane 10 is balanced by the reactions in the pins 18 and 24 relative to the respective guides.

The closing of the table carries out, in reverse order and in an opposite direction, the preceding phases and, hence, is not described for the sake of brevity.

Owing to the above, the advantages of a vehicle provided with a table 3 according to the invention are evident.

Thanks to the particular arrangement of the half planes 11, 12 and of the moving mechanism to move them relative to the housing 4, the table 3 creates a support plane 10 having an adequate extension with a minimum space taken up, in the table extraction direction, inside the dashboard 2.

In particular, thanks to the fact that the lower wall 12b is a continuation of the outer wall 2a of the dashboard 3, i.e. creates part thereof, the space taken up inside the dashboard is less than 100 mm, whereas the length of the support plane 10, in the opening direction of the table 3, is approximately 350 mm.

The use of a pair of cam arrangements 17, 23 leads to a table having great stability and structural capacity, which means that it can support up to approximately 20 kg resting on it.

Furthermore, the cam mechanism 15, 16 described above does not require the support arms present in the prior art and, hence, has smaller dimensions and is more economic. In addition, the path optimized by the guides 19 and 25 allows the half planes 11, 12 to be pulled out of the housing 4, though taking up a minimum space inside the dashboard 2.

Finally, the vehicle provided with a table 3 according to the invention can be subjected to changes and variants, which, though, do not go beyond the scope of protection set forth in the appended claims.

For example, the shape of the outer wall 2a of the dashboard 2 and, similarly, the shape of the lower wall 12b of the half plane 12 can be changed according to the needs.

Or the cam mechanisms 15, 16 can clearly be designed in a different manner, just like the cam arrangements 17 and 23 can be different or the pins can be carried by the walls now defining the guides and vice versa.

Furthermore, the lower wall 11b of the upper half plane 11 could be, in the folded configuration, a continuation of the outer wall 2a of the dashboard 2 and the lower half plane 12 could be connected, as a consequence, to the upper half plane 11.

Moreover, the walls 7 and 8 could be absent and there could be one single bottom wall 9 or the hinge 13 could be replaced by a different device allowing the half planes 11, 12 to be folded as described above.

## Claims

1. A vehicle defining an inner space (1) comprising a dashboard (2) provided with an outer wall (2a) and defining a housing (4), said vehicle comprising a table (3) which can be housed in said housing (4) and comprising a first half plane (11) and a second-half plane (12) connected to each other in a foldable manner and each comprising a support wall (11a, 12a), a pair of side walls (11c, 11d, 12c, 12d) and a lower wall (11b, 12b) opposite to said support wall (11a, 12a), when said table (3) is folded inside said housing (4), said lower wall (11b, 12b) of either said first or second half plane (11, 12) being placed in continuation with said outer wall (2a) of said dashboard (2),
**characterized in that** said housing (4) is defined inside said dashboard (2) and comprises at least a pair of side walls (5, 6) and a bottom wall (9) connected to each other, said side walls (11c, 11d, 12c, 12d) of either said first or second half planes (11, 12) being connected to said side walls (5, 6) defining said housing (4) through respective cam connections (15, 16) configured to allow the passage of said table (3) between a folded position to an unfolded position.

2. The vehicle according to claim 1, wherein said cam connections (15, 16) comprises a first cam arrangement (17) configured to guide the movements of said first and second half planes (11, 12) from said first folded position to an unfolded position of the table (3).

3. The vehicle according to claim 2, wherein each of said cam connections (15, 16) comprises a second cam arrangement (23) configured to define a static constraint between one of either said first and second half planes (11, 12) and said side walls (5, 6) when said table (3) is in an open position, said static constraint preventing said one of either said first and second half planes (11, 12) from rotating in respect to said first cam arrangement (17).

4. The vehicle according to one of the claims 2 or 3, wherein said cam arrangement (17, 23) comprises a pin (18, 24), carried by one of either said first or second half planes (11, 12) and said side walls (5, 6), configured to slide along a guide (19, 25), carried by the other of said first or second half planes (11, 12) and said side walls (5, 6).

5. The vehicle according to one of the claims 2 to 4, wherein said guide (19) of said first cam arrangement (17) comprises:
• a first curved portion (19a) concave in an upwards direction and defining a lower end of stroke (20a) for said pin (18);
• a first straight portion (19b), vertical and extending in a continuous manner from a rear end of the first curved portion (19a);
• a second curved portion (19c) concave in an upwards direction and extending in a continuous manner from an upper end of said first portion (19b); and
• a second straight portion (19d) horizontal and extending in a continuous manner from a top end of said second curved portion (19c) and further defining an upper end of stroke (20b) for said pin (18).

6. The vehicle according to one of the claims 3 to 5, wherein said guide (25) of said second cam arrangement (23) comprises a single horizontal section defining a first and a second end of stroke (25a, 25b).

7. The vehicle according to one of the preceding claims, wherein said foldable connection between said first and second half planes (11, 12) comprises a hinge (13).

8. The vehicle according to one of the preceding claims, wherein said bottom wall (9) has a depth of less than 100 mm in respect to said outer wall (2a) of said dashboard (2) .

## Patentansprüche

1. Fahrzeug, welches einen Innenraum (1) begrenzt, welcher ein Armaturenbrett (2) umfasst, welches mit einer Außenwand (2a) versehen ist und ein Gehäuse (4) begrenzt, welches Fahrzeug einen Tisch (3) umfasst, der in dem Gehäuse (4) aufgenommen werden kann und eine erste Halbebene (11) und eine zweite Halbebene (12) umfasst, die miteinander faltbar verbunden sind und die jeweils eine Stützwand (11a,12a), ein Paar von Seitenwänden (llc,lld,12c,12d) und eine untere Wand (11b,12b) gegenüber der Stützwand (l1a,12a) umfassen, welcher Tisch (3) in dem Gehäuse (4) gefaltet ist, wobei die untere Wand (11b,12b) von entweder der ersten oder der zweiten Halbebene (11,12) in der Verlängerung der Außenwand (2a) des Armaturenbretts (2) angeordnet ist,
**dadurch gekennzeichnet, dass** das Gehäuse (4) innerhalb des Armaturenbretts (2) begrenzt ist und zumindest ein Paar von Seitenwänden (5,6) und eine Bodenwand (9) umfasst, die miteinander verbunden sind, welche Seitenwände (llc,lld,12c,12d) von entweder der ersten oder der zweiten Halbebene (11,12) mit den Seitenwänden (5,6) verbunden sind und das Gehäuse (4) durch jeweilige Nockenverbindungen (15,16) definieren, dazu ausgebildet, um den Übergang des Tisches (3) zwischen einer gefalteten Position und einer entfalteten Position zu ermöglichen.

2. Fahrzeug gemäß Anspruch 1, bei welchem die Nockenverbindungen (15,16) eine erste Nockenanordnung (17) umfassen, ausgebildet zur Führung der Bewegungen der ersten und zweiten Halbebenen (11,12) von der ersten gefalteten Position zu einer entfalteten Position des Tisches (3).

3. Fahrzeug gemäß Anspruch 2, bei welchem jede der Nockenverbindungen (15,16) eine zweite Nockenanordnung (23) umfasst, ausgebildet zur Festlegung einer statischen Begrenzung zwischen einer der ersten und zweiten Halbebenen (11,12) und den Seitenwänden (5,6), wenn der Tisch (3) sich in einer offenen Position befindet, welche statische Begrenzung eine der ersten und zweiten Halbebenen (11,12) daran hindert, sich bezüglich der ersten Nockenanordnung (17) zu drehen.

4. Fahrzeug gemäß einem der Ansprüche 2 oder 3, bei welchem die Nockenanordnung (17,23) einen Stift (18,24) umfasst, der von einer der ersten oder zweiten Halbebenen (11,12) getragen wird, sowie Seitenwände (5,6), dazu ausgebildet, entlang einer Führung (19,25) zu gleiten, die von der anderen der ersten oder zweiten Halbebenen (11,12) und den Seitenwänden (5,6) getragen wird.

5. Fahrzeug gemäß einem der Ansprüche 2 bis 4, bei welchem die Führung (19) der ersten Nockenanordnung (17) folgendes umfasst:
- einen ersten gekrümmten Abschnitt (19a), der in einer Aufwärtsrichtung konkav ist und ein unteres Ende eines Hubs (20a) des Stiftes (18) festlegt;
- einen ersten geraden Abschnitt (19b), der vertikal steht und sich kontinuierlich von einem hinteren Ende des ersten gekrümmten Abschnitts (19a) erstreckt;
- einen zweiten gekrümmten Abschnitt (19c), der in einer Aufwärtsrichtung konkav ist und sich kontinuierlich von einem oberen Ende des ersten Abschnitts (19b) erstreckt; und
- einen zweiten geraden Abschnitt (19d), der horizontal steht und sich kontinuierlich von einem oberen Ende des zweiten gekrümmten Abschnitts (19c) erstreckt und der ferner ein oberes Ende des Hubs (20b) des Stiftes (18) festlegt.

6. Fahrzeug gemäß einem der Ansprüche 3 bis 5, bei welchem die Führung (25) der zweiten Nockenanordnung (23) einen einzigen horizontalen Abschnitt umfasst, der ein erstes und ein zweites Ende des Hubs (25a,25b) festlegt.

7. Fahrzeug gemäß einem der vorhergehenden Ansprüche, bei welchem die faltbare Verbindung zwischen den ersten und zweiten Halbebenen (11,12) ein Scharnier (13) umfasst.

8. Fahrzeug gemäß einem der vorhergehenden Ansprüche, bei welchem die Bodenwand (9) eine Tiefe von weniger als 100 mm bezüglich der Außenwand (2a) des Armaturenbretts (2) aufweist.

## Revendications

1. Véhicule définissant un espace intérieur (1) comprenant un tableau de bord (2) doté d'une paroi externe (2a) et définissant un logement (4), ledit véhicule comprenant une table (3) qui peut être logée dans ledit logement (4) et comprenant un premier demi-plan (11) et un deuxième demi-plan (12) reliés l'un à l'autre de manière pliable et comprenant chacun une paroi de support (11a, 12a), une paire de parois latérales (11c, 11d, 12c, 12d) et une paroi inférieure (11b, 12b) opposée à ladite paroi de support (11a, 12a), lorsque ladite table (3) est pliée à l'intérieur dudit logement (4), ladite paroi inférieure (11b, 12b) de l'un quelconque dudit premier ou deuxième demi-plan (11, 12) est placée dans la continuité de ladite paroi extérieure (2a) dudit tableau de bord (2),
**caractérisé en ce que** ledit logement (4) est défini à l'intérieur dudit tableau de bord (2) et comprend au moins une paire de parois latérales (5, 6) et une paroi inférieure (9) reliées entre elles, lesdites parois latérales (11c, 11d, 12c, 12d) de l'un quelconque desdits premier et deuxième demi-plans (11, 12) étant connectés auxdites parois latérales (5, 6) définissant ledit logement (4) par l'intermédiaire de connexions à cames respectives (15, 16) configurées pour permettre le passage de ladite table (3) entre une position pliée et une position dépliée.

2. Véhicule selon la revendication 1, dans lequel lesdites connexions à cames (15, 16) comprennent un premier agencement de cames (17) configuré pour guider les déplacements desdits premier et deuxième demi-plans (11, 12) de ladite première position pliée à une position dépliée de la table (3).

3. Véhicule selon la revendication 2, dans lequel chacune desdites connexions à cames (15, 16) comprend un deuxième agencement de cames (23) configuré pour définir une contrainte statique entre l'un quelconque desdits premier et deuxième demi-plans (11, 12) et lesdites parois latérales (5, 6) lorsque ladite table (3) est en position ouverte, ladite contrainte statique empêchant ledit un quelconque des premier et deuxième demi-plans (11, 12) de tourner par rapport audit premier agencement de cames (17).

4. Véhicule selon l'une des revendications 2 ou 3, dans lequel ledit agencement de cames (17, 23) comprend une tige (18, 24), portée par l'un quelconque desdits premier ou deuxième demi-plans (11, 12) et lesdites parois latérales (5, 6), configurée pour coulisser le long d'un guide (19, 25), porté par l'autre desdits premier ou deuxième demi-plans (11, 12) et lesdites parois latérales (5, 6).

5. Véhicule selon l'une des revendications 2 à 4, dans lequel ledit guide (19) dudit premier agencement de cames (17) comprend :
- une première partie courbe (19a) concave dans une direction vers le haut et définissant une extrémité inférieure de course (20a) pour ladite tige (18) ;
- une première partie droite (19b), verticale et s'étendant de manière continue depuis une extrémité arrière de la première partie courbe (19a) ;
- une deuxième partie courbe (19c) concave dans une direction vers le haut et s'étendant de manière continue depuis une extrémité supérieure de ladite première partie (19b) ; et
- une deuxième partie droite (19d) horizontale et s'étendant de manière continue depuis une extrémité supérieure de ladite deuxième partie courbe (19c) et définissant en outre une extrémité supérieure de course (20b) pour ladite tige (18).

6. Véhicule selon l'une des revendications 3 à 5, dans lequel ledit guide (25) dudit deuxième agencement de cames (23) comprend une section horizontale unique définissant une première et une deuxième extrémité de course (25a, 25b).

7. Véhicule selon l'une des revendications précédentes, dans lequel ladite connexion pliable entre lesdits premier et deuxième demi-plans (11, 12) comprend une charnière (13).

8. Véhicule selon l'une des revendications précédentes, dans lequel ladite paroi inférieure (9) a une profondeur inférieure à 100 mm par rapport à ladite paroi extérieure (2a) dudit tableau de bord (2).
